# EUROPEAN PATENT APPLICATION

(11) **EP 2 713 655 A1**
(43) Date of publication of application: **02.04.2014**
(21) Application number: 11864802.1
(22) Date of filing: 29.09.2011
(51) Int. Cl.: H04W 36/08

(54) **INTERCELL SWITCHING METHOD, BASE STATION AND SYSTEM**

(71) Applicant: Huawei Technologies Co., Ltd., Shenzhen, Guangdong 518129 (CN)
(72) Inventor: XIE, Yingchun, Shenzhen, Guangdong 518129 (CN)
(74) Representative: Pfenning, Meinig & Partner GbR
(86) International application number: PCT/CN2011/080376
(87) International publication number: WO 2012/149782

(57) **Abstract**

The present invention discloses a method for inter-cell handover, base station, and system, relating to the field of communications technologies, for solving a problem that when a user equipment performs inter-cell handover, the handover success rate is low due to relatively large neighboring cell interference. The method for inter-cell handover provided in the present invention includes: sending a handover command to the user equipment by using a source cell handover bandwidth to instruct the user equipment to hand over from a source base station to a target base station; and when the user equipment exchanges handover signaling with the target base station by using a target cell handover bandwidth, performing interference coordination on the target cell handover bandwidth to reduce interference on the user equipment. The present invention is applicable to the field of communications, and used for performing the inter-cell handover on a user equipment at a cell edge.

## Description

### TECHNICAL FIELD

The present invention relates to the field of communications technologies, and in particular, to a method for inter-cell handover, base station, and system.

### BACKGROUND

In the field of wireless communications technologies, the LTE (long term evolution, 3GPP long term evolution) system is a major trend in the development of communications technologies. The LTE system uses OFDMA (orthogonal frequency division multiple access, orthogonal frequency division multiple access) as a multi-access manner to construct a cellular mobile communications network, where intra-cell interference on the system is quite small, but inter-cell interference cannot be ignored. Particularly, when a UE (user equipment, user equipment) at a cell edge is handed over between neighboring cells, it suffers severe neighboring cell interference.

At present, an ICIC (inter-cell interference coordination, inter-cell interference coordination) technology is adopted to reduce neighboring cell interference between cells in the LTE system. The ICIC technology is a technology closely combined with scheduling and power control. By limiting allocation of frequency resources and power resources, services that cause large interference on neighboring cells are limited on edge bands orthogonal to the neighboring cells, so that the edge bands between cells do not interfere with each other, thereby improving the throughput rate of a user at a cell edge and improving the system coverage capability.

During the implementation of the present invention, the inventor finds that the prior art has at least the following problem: when a large amount of neighboring cells lead to large neighboring cell interference, the adoption of the ICIC technology may cause fragmentation of handover signaling or data packets exchanged between a UE and a base station during handover, leading to a relatively low handover success rate.

### SUMMARY

Embodiments of the present invention provide a method for inter-cell handover, base station, and system, which can reduce neighboring cell interference caused to a UE when an inter-cell handover is performed by the UE, thereby increasing the handover success rate, and reducing the uplink and downlink delay for user data handover.

In order to achieve the above objectives, the embodiments of the present invention adopt the following technical solutions:

In one aspect, an embodiment of the present invention provides a method for inter-cell handover, including:
sending a handover command to a user equipment by using a source cell handover bandwidth to instruct the user equipment to hand over from a source base station to a target base station; and
when the user equipment exchanges handover signaling with the target base station by using a target cell handover bandwidth, performing interference coordination on the target cell handover bandwidth to reduce interference on the user equipment.

In another aspect, an embodiment of the present invention further provides a method for inter-cell handover, including:
performing interference coordination on a source cell handover bandwidth when a user equipment exchanges handover signaling with a source base station;
stopping the interference coordination on the source cell handover bandwidth in the case that the user equipment completes the handover signaling exchange between the user equipment and the source base station; and
exchanging handover signaling with the user equipment by using a target cell handover bandwidth to complete handover of the user equipment from the source base station to a target base station.

In still another aspect, an embodiment of the present invention further provides a base station, including:
a first sending module, configured to send a handover command to a user equipment by using a source cell handover bandwidth to instruct the user equipment to hand over from the base station to a target base station; and
a first processing module, configured to: when the user equipment exchanges handover signaling with the target base station by using a target cell handover bandwidth, perform interference coordination on the target cell handover bandwidth to reduce interference of the base station on the user equipment.

In yet another aspect, an embodiment of the present invention further provides a base station, including:
a second processing module, configured to perform interference coordination on a source cell handover bandwidth when a user equipment exchanges handover signaling with a source base station;
a third processing module, configured to instruct, in the case that the user equipment completes the handover signaling exchange between the user equipment and the source base station, the base station to stop the interference coordination on the source cell handover bandwidth; and
a handover module, configured to exchange handover signaling with the user equipment by using a target cell handover bandwidth to complete handover of the user equipment from the source base station to the base station.

In another aspect, an embodiment of the present invention further provides an inter-cell handover system, including the foregoing base station.

According to the method for inter-cell handover, base station, and system provided by the embodiments of the present invention, a user equipment exchanges handover signaling with a source base station by using a source cell handover bandwidth, a target base station performs interference coordination on the source cell handover bandwidth to reduce neighboring cell interference on the user equipment; and when the user equipment exchanges handover signaling with the target base station by using a target cell handover bandwidth, the source base station performs interference coordination on the target cell handover bandwidth to reduce neighboring cell interference on the user equipment. Compared with the prior art, in the embodiments of the present invention, when the user equipment performs inter-cell handover, the neighboring cell interference on the user equipment generated by a neighboring cell base station can be reduced, a handover success rate can be improved, and an uplink and downlink delay for user data handover can be reduced.

### BRIEF DESCRIPTION OF DRAWINGS

To illustrate the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic flowchart of a method according to Embodiment 1 of the present invention;
FIG. 2 is a schematic flowchart of a method according to Embodiment 2 of the present invention;
FIG. 3 is a schematic flowchart of a method according to Embodiment 3 of the present invention;
FIG. 4 to FIG. 6 are structural block diagrams of a base station according to Embodiment 4 of the present invention; and
FIG. 7 and FIG. 8 are structural block diagrams of a base station according to Embodiment 5 of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

### Embodiment 1

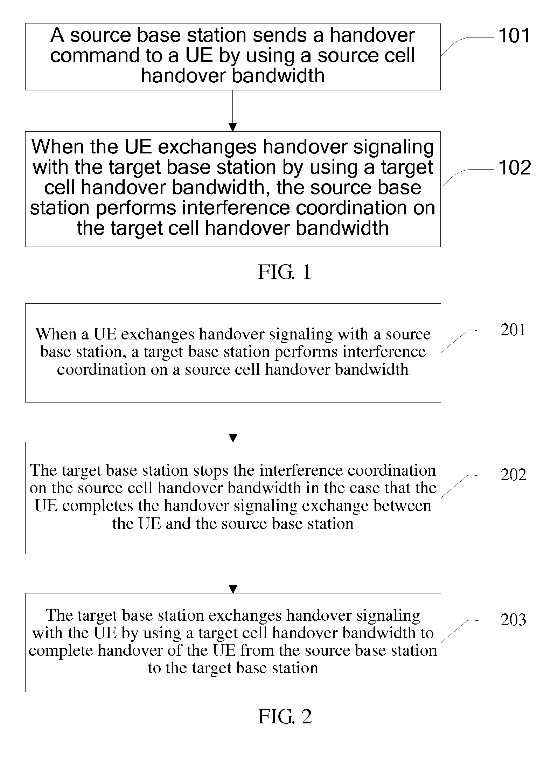

The embodiment of the present invention provides a method for inter-cell handover. As shown in FIG. 1, the method includes:
101: A source base station sends a handover command to a UE by using a source cell handover bandwidth to instruct the UE to hand over from a source base station to a target base station.
102: When the UE exchanges handover signaling with the target base station by using a target cell handover bandwidth, the source base station performs interference coordination on the target cell handover bandwidth to reduce interference on the UE.

The source cell handover bandwidth and the target cell handover bandwidth may be predetermined by the source base station and the target base station, or may be set in a network planning layout, which are not limited herein. The source cell handover bandwidth is used by the source base station and the UE to transmit handover signaling, and the target cell handover bandwidth is used by the target base station and the UE to transmit handover signaling. Specifically, the source cell handover bandwidth includes a source cell uplink handover bandwidth and a source cell downlink handover bandwidth, and the target cell handover bandwidth includes a target cell uplink handover bandwidth and a target cell downlink handover bandwidth.

It is noteworthy that, the inter-cell handover includes inter-cell handover within a base station and inter-cell handover between base stations. When the UE performs the inter-cell handover within a base station, the source base station and the target base station are the same base station. In a process in which the UE performs the inter-cell handover, apart from handover signaling exchange with the source base station and the target base station, data exchange may also be performed with the source base station and the target base station, which is not limited herein.

In the method provided by the embodiment of the present invention, when a UE exchanges handover signaling with a target base station by using a target cell handover bandwidth, a source base station performs interference coordination on the target cell handover bandwidth to reduce neighboring cell interference on the UE. Compared with the prior art, in the method provided by the embodiment of the present invention, when the UE performs inter-cell handover, the neighboring cell interference on the UE generated by the source base station can be reduced, a handover success rate increases, and an uplink and downlink delay for handover user data can be reduced.

### Embodiment 2

The embodiment of the present invention provides a method for inter-cell handover. As shown in FIG. 2, the method includes:
201: When a UE exchanges handover signaling with a source base station, a target base station performs interference coordination on a source cell handover bandwidth.
202: The target base station stops the interference coordination on the source cell handover bandwidth in the case that the UE completes the handover signaling exchange between the UE and the source base station.
203: The target base station exchanges handover signaling with the UE by using a target cell handover bandwidth to complete handover of the UE from the source base station to the target base station.

The source cell handover bandwidth and the target cell handover bandwidth may be predetermined by the source base station and the target base station, or may be set in a network planning layout, which are not limited herein. The source cell handover bandwidth is used by the source base station and the UE to transmit handover signaling, and the target cell handover bandwidth is used by the target base station and the UE to transmit handover signaling. Specifically, the source cell handover bandwidth includes a source cell uplink handover bandwidth and a source cell downlink handover bandwidth, and the target cell handover bandwidth includes a target cell uplink handover bandwidth and a target cell downlink handover bandwidth.

It is noteworthy that, the inter-cell handover includes inter-cell handover within a base station and inter-cell handover between base stations. When the UE performs the inter-cell handover within a base station, the source base station and the target base station are the same base station. In a process in which the UE performs the inter-cell handover, apart from handover signaling exchange with the source base station and the target base station, data exchange may also be performed with the source base station and the target base station, which is not limited herein.

In the method provided by the embodiment of the present invention, when a UE exchanges handover signaling with a source base station by using a source cell handover bandwidth, a target base station performs interference coordination on the source cell handover bandwidth to reduce neighboring cell interference on the UE. Compared with the prior art, in the method provided by the embodiment of the present invention, when the UE performs inter-cell handover, the neighboring cell interference on the UE generated by the target base station can be reduced, a handover success rate increases, and an uplink and downlink delay for handover user data can be reduced.

### Embodiment 3

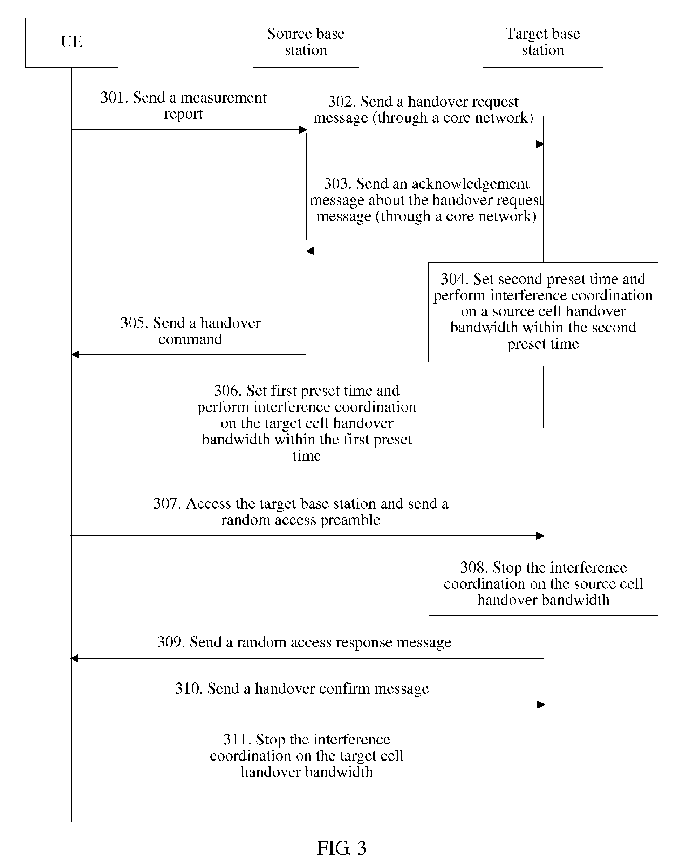

The embodiment of the present invention provides a method for inter-cell handover. As shown in FIG. 3, the method includes:
301: A source base station receives a measurement report sent by a UE, where the measurement report is used for determining a target base station.
302: The source base station sends a handover request (handover request) message to the target base station according to the measurement report and RRM (radio resource management, radio resource management) information; or
   the source base station sends a handover request message to a core network according to the measurement report and RRM information, and the core network forwards the handover request message to the target base station.
303: The target base station receives the handover request message, and sends an acknowledgement message about the handover request message to the source base station; or
   the target base station sends an acknowledgement message about the handover request message to the core network after receiving the handover request message, and the core network forwards the acknowledgement message to the source base station.
304: The target base station sets second preset time and performs interference coordination on a source cell handover bandwidth within the second preset time, thereby reducing neighboring cell interference of the target base station on the UE when the UE exchanges handover signaling with the source base station, where the second preset time is time in which the UE is capable of completing the handover signaling exchange between the UE and the source base station.

Specifically, the target base station may set the second preset time through a timer, or may set the second preset time in other timing manners, which is not limited herein.

It is noteworthy that, the source cell handover bandwidth and the target cell handover bandwidth may be predetermined by the source base station and the target base station, or may be set in a network planning layout, which are not limited herein. The source cell handover bandwidth is used by the source base station and the UE to transmit handover signaling, and the target cell handover bandwidth is used by the target base station and the UE to transmit handover signaling. Specifically, the source cell handover bandwidth includes a source cell uplink handover bandwidth and a source cell downlink handover bandwidth, and the target cell handover bandwidth includes a target cell uplink handover bandwidth and a target cell downlink handover bandwidth.

Specifically, that the target base station performs interference coordination on the source cell handover bandwidth includes: performing, by the target base station, no scheduling within the source cell handover bandwidth; or
performing, by the target base station, scheduling with reduced power within the source cell handover bandwidth.
305: In the case that the target base station performs interference coordination on the source cell handover bandwidth, the source base station sends a handover command to the UE by using the source cell handover bandwidth to make the UE hand over from the source base station to the target base station.

Specifically, the handover signaling between the source base station and the UE may be exchanged by using one or more RBs (resource block, resource block) in the source cell handover bandwidth, where the RB is a minimum scheduling unit in the handover process. When the UE performs handover scheduling by using multiple RBs, the multiple RBs may be consecutive, or may also be discrete, which is not limited herein.
306: The source base station sets first preset time and performs interference coordination on the target cell handover bandwidth within the first preset time, thereby reducing the neighboring cell interference of the source base station on the UE in a process in which the UE exchanges handover signaling with the target base station by using the target cell handover bandwidth. The first preset time is time in which the UE is capable of completing the handover signaling exchange between the UE and the target base station.

Specifically, the source base station may set the first preset time by using a timer, or may set the first preset time in other timing manners, which is not limited herein.

Specifically, that the source base station performs interference coordination on the target cell handover bandwidth includes: performing, by the source base station, no scheduling within the target cell handover bandwidth; or
performing, by the source base station, scheduling with reduced power within the target cell handover bandwidth.
307: The UE separates from the source base station, starts to access the target base station, and sends a random access preamble (random access sequence) to the target base station.
308: The target base station stops the interference coordination on the source cell handover bandwidth after receiving the random access preamble sent by the UE.

It is noteworthy that, when the handover of the UE to the target base station fails and the UE fails to send the random access preamble, the target base station stops the interference coordination on the source cell handover bandwidth after the second preset time is reached.

It is worth mentioning that the timer may be closed after step 308 if the target base station sets the second preset time by using a timer.
309: The target base station sends a random access response (random access response) message to the UE by using the target cell handover bandwidth.
310: The UE sends a handover confirm (handover confirm) message to the target base station by using the target cell handover bandwidth to indicate that the handover of the UE side to the target base station is completed.
311: The source base station stops the interference coordination on the target cell handover bandwidth after the UE completes the handover to the target base station.

It is noteworthy that, when an error occurs in the handover process and the UE fails to complete the handover, the source base station stops the interference coordination on the target cell handover bandwidth after the first preset time is reached. The timer may be closed after step 311 if the source base station sets the first preset time by using a timer.

It is noteworthy that, after the UE hands over from the source base station to the target base station, the source base station may execute operations which are not limited to the following:
the source base station forwards cached data of the UE to the target base station; and/or
the source base station receives an end marker (end marker) message sent by a serving gateway, and sends the end marker message to the target base station; and/or
the source base station receives a command of release resources (releasing resources) sent by the target base station, and releases resources of the UE according to the command.

Further, the source base station may stop the interference coordination on the target cell handover bandwidth after executing the foregoing operations completely, that is:
the source base station may stop the interference coordination on the target cell handover bandwidth after forwarding cached data about the UE; or
the source base station may stop the interference coordination on the target cell handover bandwidth after receiving an end marker sent by a serving gateway; or
the source base station may stop the interference coordination on the target cell handover bandwidth after releasing resources of the UE.

As mentioned above, in the process in which the UE performs the inter-cell handover, when the UE exchanges handover signaling with the target base station by using the target cell handover bandwidth, the source base station performs interference coordination on the target cell handover bandwidth to reduce neighboring cell interference on the UE, where the target cell handover bandwidth includes a source cell uplink handover bandwidth and a source cell downlink handover bandwidth; and when the UE performs handover bandwidth with the source base station by using the source cell handover bandwidth, the target base station performs interference coordination on the source cell handover bandwidth to reduce neighboring cell interference on the UE, where the source cell handover bandwidth includes a source cell uplink handover bandwidth and a source cell downlink handover bandwidth. It is noteworthy that, while improving the throughput rate of a user within the cell, to reduce a burden of the base station, the source base station may perform interference coordination only on the target cell uplink handover bandwidth, or may perform interference coordination only on the target cell downlink bandwidth; and the target base station may perform interference coordination only on the source cell uplink handover bandwidth, or may perform interference coordination only on the source cell downlink handover bandwidth.

In the method for inter-cell handover provided by the embodiment of the present invention, when a UE exchanges handover signaling with a source base station by using a source cell handover bandwidth, a target base station performs interference coordination on the source cell handover bandwidth to reduce neighboring cell interference on the UE; and when the UE exchanges handover signaling with the target base station by using a target cell handover bandwidth, the source base station performs interference coordination on the target cell handover bandwidth to reduce neighboring cell interference on the UE. Compared with the prior art, in the embodiment of the present invention, when the UE performs inter-cell handover, the neighboring cell interference on the UE generated by a neighboring cell base station can be reduced, a handover success rate increases, and an uplink and downlink delay for handover user data can be reduced.

### Embodiment 4

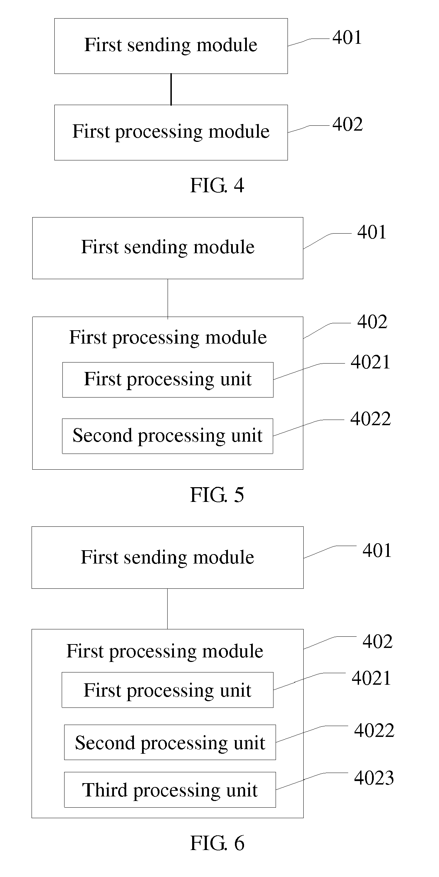

The embodiment of the present invention provides a base station, which is capable of implementing the method of a source base station side in the foregoing method embodiment. As shown in FIG. 4, the base station includes:
a first sending module 401, configured to send a handover command to a UE by using a source cell handover bandwidth to instruct the UE to hand over from the base station to a target base station; and
a first processing module 402, configured to: when the UE exchanges handover signaling with the target base station by using a target cell handover bandwidth, perform interference coordination on the target cell handover bandwidth to reduce interference of the base station on the UE.

Optionally, the first processing module 402 is further configured to control the base station to perform interference coordination on a target cell uplink handover bandwidth; or
the first processing module 402 is further configured to control the base station to perform interference coordination on a target cell downlink handover bandwidth; or
the first processing module 402 is further configured to control the base station to perform interference coordination on the target cell uplink handover bandwidth and the target cell downlink handover bandwidth simultaneously.

Further, as shown in FIG. 5, the first processing module 402 includes: a first processing unit 4021 and/or a second processing unit 4022.

The first processing unit 4021 is configured to instruct the base station to perform no scheduling within the target cell handover bandwidth.

The second processing unit 4022 is configured to instruct the base station to perform scheduling with reduced power within the target cell handover bandwidth.

Further, as shown in FIG. 6, the first processing module 402 further includes a third processing unit 4023, where the third processing unit 4023 is configured to instruct the base station to stop the interference coordination on the target cell handover bandwidth after the UE completes the handover.

Specifically, the third processing unit 4023 is further configured to instruct the base station to stop the interference coordination on the target cell handover bandwidth when the base station forwards cached data of the UE completely; or
the third processing unit 4023 is further configured to instruct the base station to stop the interference coordination on the target cell handover bandwidth when receiving an End Marker sent by a serving gateway; or
the third processing unit 4023 is further configured to instruct the base station to stop the interference coordination on the target cell handover bandwidth when the base station releases resources of the UE completely; or
the third processing unit 4023 is further configured to instruct the base station to stop the interference coordination on the target cell handover bandwidth when the base station receives a UE context release (user equipment context release) message sent by the target base station.

Further, the third processing unit 4023 is further configured to instruct the base station to stop the interference coordination on the target cell handover bandwidth when first preset time is reached, where the first preset time is time in which the user equipment is capable of completing the handover signaling exchange between the user equipment and the target base station.

According to the base station provided by the embodiment of the present invention, when a UE exchanges handover signaling with a target base station by using a target cell handover bandwidth, a first processing module 402 performs interference coordination on the target cell handover bandwidth to reduce neighboring cell interference on the UE. Compared with the prior art, according to the base station provided by the embodiment of the present invention, when the UE performs inter-cell handover, neighboring cell interference on the UE generated by the source base station can be reduced, a handover success rate increases, and an uplink and downlink delay for handover user data is reduced.

### Embodiment 5

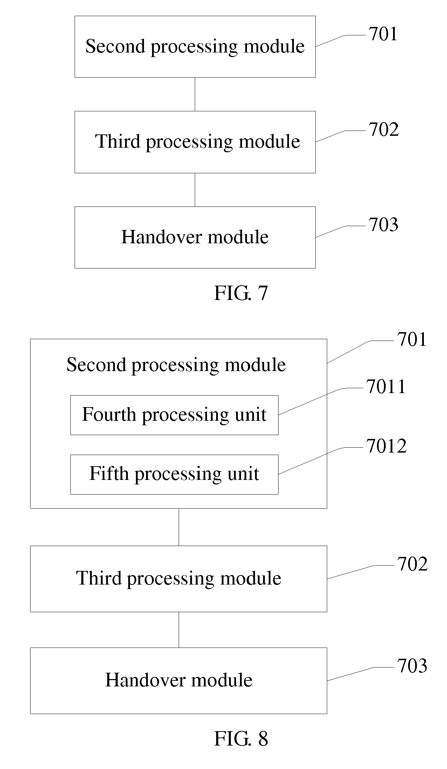

The embodiment of the present invention provides a base station, which can implement the method of a target base station side in the foregoing method embodiment. As shown in FIG. 7, the base station includes:
a second processing module 701, configured to perform interference coordination on a source cell handover bandwidth when a UE exchanges handover signaling with a source base station;
a third processing module 702, configured to instruct, in the case that the UE completes the handover signaling exchange between the UE and the source base station, the base station to stop the interference coordination on the source cell handover bandwidth; and
a handover module 703, configured to exchange handover signaling with the UE by using a target cell handover bandwidth to complete handover of the UE from the source base station to the base station.

Specifically, the second processing module 701 is configured to perform interference coordination on a source cell uplink handover bandwidth; or
the second processing module 701 is further configured to perform interference coordination on a source cell downlink handover bandwidth; or
the second processing module 701 is further configured to perform interference coordination on the source cell uplink handover bandwidth and the source cell downlink handover bandwidth simultaneously.

Further, as shown in FIG. 8, the second processing module 701 includes a fourth processing unit 7011 and/or a fifth processing unit 7012.

The fourth processing unit 7011 is configured to instruct the base station to perform no scheduling within the source cell handover bandwidth.

The fifth processing unit 7012 is configured to instruct the base station to perform scheduling with reduced power within the source cell handover bandwidth.

Further, the third processing module 702 is further configured to instruct the base station to stop the interference coordination on the source cell handover bandwidth when a random access preamble sent by the UE is received.

Specifically, the third processing module 702 is further configured to instruct the base station to stop the interference coordination on the source cell handover bandwidth when second preset time is reached, where the second preset time is time in which the user equipment is capable of completing the handover signaling exchange between the user equipment and the source base station.

According to the base station provided by the embodiment of the present invention, when a UE exchanges handover signaling with a source base station by using a source cell handover bandwidth, a second processing module 701 performs interference coordination on the source cell handover bandwidth to reduce neighboring cell interference on the UE. Compared with the prior art, in the embodiment of the present invention, when the UE performs inter-cell handover, the neighboring cell interference on the UE generated by a target base station can be reduced, a handover success rate increases, and an uplink and downlink delay for handover user data can be reduced.

An embodiment of the present invention further provides an inter-cell handover system, including the base station shown in FIG. 4 to FIG. 6 and the base station shown in FIG. 7 and FIG. 8. When a UE performs inter-cell handover between a source base station and a target base station, neighboring cell interference on the UE can be reduced. For the specific implementation method, reference is made to the foregoing apparatus embodiments, which is not repeated again herein. It is noteworthy that, the inter-cell handover includes inter-cell handover within a base station and inter-cell handover between base stations. When the UE performs the inter-cell handover within a base station, the source base station and the target base station are the same base station.

Through the foregoing description of the embodiments, it is clear to a person skilled in the art that the present invention may be implemented by software plus necessary universal hardware, and definitely may also be implemented by hardware, but in many cases, the software implementation is preferred. Based on such an understanding, the technical solutions of the present invention essentially, or the part contributing to the prior art may be implemented in a form of a software product. The computer software product is stored in a readable storage medium, for example, a floppy disk, a hard disk, or an optical disk of the computer, and includes several instructions for instructing a computer device (which may be a personal computer, a server, or a network device) to perform the methods described in the embodiments of the present invention.

The foregoing descriptions are merely specific embodiments of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A method for inter-cell handover, comprising:
Sending a handover command to a user equipment by using a source cell handover bandwidth to instruct the user equipment to hand over from a source base station to a target base station; and
when the user equipment exchanges handover signaling with the target base station by using a target cell handover bandwidth, performing interference coordination on the target cell handover bandwidth to reduce interference on the user equipment.

2. The method according to claim 1, wherein the performing interference coordination on the target cell handover bandwidth comprises:
performing interference coordination on a target cell uplink handover bandwidth; or
performing interference coordination on a target cell downlink handover bandwidth; or
performing interference coordination on the target cell uplink handover bandwidth and the target cell downlink handover bandwidth simultaneously.

3. The method according to claim 2, wherein the performing interference coordination on the target cell handover bandwidth comprises:
performing no scheduling within the target cell handover bandwidth; and/ or
performing scheduling with reduced power within the target cell handover bandwidth.

4. The method according to any one of claims 1-3, further comprising:
stopping the interference coordination on the target cell handover bandwidth after the user equipment completes the handover.

5. The method according to claim 4, wherein the stopping the interference coordination on the target cell handover bandwidth after the user equipment completes the handover comprises one of or a combination of the following:
stopping the interference coordination on the target cell handover bandwidth when the source base station forwards cached data of the user equipment completely;
stopping the interference coordination on the target cell handover bandwidth when the source base station receives an end marker indicator sent by a serving gateway;
stopping the interference coordination on the target cell handover bandwidth when the source base station releases resources of the user equipment completely; and
stopping the interference coordination on the target cell handover bandwidth when the source base station receives a user equipment context release message sent by the target base station.

6. The method according to any one of claims 1-5, further comprising:
stopping the interference coordination on the target cell handover bandwidth when first preset time is reached, wherein the first preset time is time in which the user equipment is capable of completing the handover signaling exchange between the user equipment and the target base station.

7. A method for inter-cell handover, comprising:
performing interference coordination on a source cell handover bandwidth when a user equipment exchanges handover signaling with a source base station;
stopping the interference coordination on the source cell handover bandwidth in the case that the user equipment completes the handover signaling exchange between the user equipment and the source base station; and
exchanging handover signaling with the user equipment by using a target cell handover bandwidth to complete handover of the user equipment from the source base station to a target base station.

8. The method according to claim 7, wherein the performing interference coordination on the source cell handover bandwidth comprises:
performing interference coordination on a source cell uplink handover bandwidth; or
performing interference coordination on a source cell downlink handover bandwidth; or
performing interference coordination on the source cell uplink handover bandwidth and the source cell downlink handover bandwidth simultaneously.

9. The method according to claim 8, wherein the performing interference coordination on the source cell handover bandwidth comprises:
performing no scheduling within the source cell handover bandwidth; and/ or
performing scheduling with reduced power within the source cell handover bandwidth.

10. The method according to any one of claims 7-9, wherein the stopping the interference coordination on the source cell handover bandwidth in the case that the user equipment completes the handover signaling exchange between the user equipment and the source base station comprises:
stopping the interference coordination on the source cell handover bandwidth when a random access sequence sent by the user equipment is received.

11. The method according to claim 10, further comprising:
stopping the interference coordination on the source cell handover bandwidth when second preset time is reached, wherein the second preset time is time in which the user equipment is capable of completing the handover signaling exchange between the user equipment and the source base station.

12. A base station, comprising:
a first sending module, configured to send a handover command to a user equipment by using a source cell handover bandwidth to instruct the user equipment to hand over from the base station to a target base station; and
a first processing module, configured to: when the user equipment exchanges handover signaling with the target base station by using a target cell handover bandwidth, perform interference coordination on the target cell handover bandwidth to reduce interference of the base station on the user equipment.

13. The base station according to claim 12, wherein the first processing module is further configured to control the base station to perform interference coordination on a target cell uplink handover bandwidth; or
the first processing module is further configured to control the base station to perform interference coordination on a target cell downlink handover bandwidth; or
the first processing module is further configured to control the base station to perform interference coordination on the target cell uplink handover bandwidth and the target cell downlink handover bandwidth simultaneously.

14. The base station according to claim 13, wherein the first processing module comprises:
a first processing unit, configured to instruct the base station to perform no scheduling within the target cell handover bandwidth; and/or
a second processing unit, configured to instruct the base station to perform scheduling with reduced power within the target cell handover bandwidth.

15. The base station according to any one of claims 12-14, wherein the first processing module further comprises:
a third processing unit, configured to instruct the base station to stop the interference coordination on the target cell handover bandwidth when the user equipment completes the handover.

16. The base station according to claim 15, wherein the third processing unit is configured to: when cached data of the user equipment is forwarded completely, instruct the base station to stop the interference coordination on the target cell handover bandwidth; or
the third processing unit is further configured to: when an end marker indicator sent by a serving gateway is received, instruct the base station to stop the interference coordination on the target cell handover bandwidth; or
the third processing unit is further configured to: when resources of the user equipment are released completely, instruct the base station to stop the interference coordination on the target cell handover bandwidth; or
the third processing unit is further configured to: when a user equipment context release message sent by the target base station is received, instruct the base station to stop the interference coordination on the target cell handover bandwidth.

17. The base station according to any one of claims 12-16, wherein the third processing unit is further configured to: when first preset time is reached, instruct the base station to stop the interference coordination on the target cell handover bandwidth, wherein the first preset time is time in which the user equipment is capable of completing the handover signaling exchange between the user equipment and the target base station.

18. A base station, comprising:
a second processing module, configured to perform interference coordination on a source cell handover bandwidth when a user equipment exchanges handover signaling with a source base station;
a third processing module, configured to instruct, in the case that the user equipment completes the handover signaling exchange between the user equipment and the source base station, the base station to stop the interference coordination on the source cell handover bandwidth; and
a handover module, configured to exchange handover signaling with the user equipment by using a target cell handover bandwidth to complete handover of the user equipment from the source base station to the base station.

19. The base station according to claim 18, wherein the second processing module is configured to control the base station to perform interference coordination on a source cell uplink handover bandwidth; or
the second processing module is further configured to control the base station to perform interference coordination on a source cell downlink handover bandwidth; or
the second processing module is further configured to control the base station to perform interference coordination on the source cell uplink handover bandwidth and the source cell downlink handover bandwidth simultaneously.

20. The base station according to claim 19, wherein the second processing module comprises:
a fourth processing unit, configured to instruct the base station to perform no scheduling within the source cell handover bandwidth; and/or
a fifth processing unit, configured to instruct the base station to perform scheduling with reduced power within the source cell handover bandwidth.

21. The base station according to any one of claims 18-20, wherein the third processing module is configured to: when a random access sequence sent by the user equipment is received, instruct the base station to stop the interference coordination on the source cell handover bandwidth.

22. The base station according to claim 21, wherein the third processing module is further configured to: when second preset time is reached, instruct the base station to stop the interference coordination on the source cell handover bandwidth, wherein the second preset time is time in which the user equipment is capable of completing the handover signaling exchange between the user equipment and the source base station.

23. An inter-cell handover system, comprising the base station according to any one of claims 12-17 and the base station according to any one of claims 18-22.
